# EUROPEAN PATENT SPECIFICATION

(11) **EP 0 970 158 B1**
(45) Date of publication and mention of the grant of the patent: **05.06.2002**
(21) Application number: 98910423.7
(22) Date of filing: 17.03.1998
(51) Int. Cl.: C09K 3/10, B65D 41/04

(54) **CONTAINER CLOSURE HAVING AN IMPROVED SEALING LINER**
BEHÄLTERVERSCHLUSS MIT DICHTUNGSEINSATZ
CAPSULE DE CONTENANT MUNIE D'UN JOINT D'ETANCHEITE

(30) Priority: 18.03.1997 US 41075 P
(43) Date of publication of application: 12.01.2000
(73) Proprietor: E.I. DU PONT DE NEMOURS AND COMPANY, Wilmington Delaware 19898 (US)
(72) Inventor: KIRK, Allen, Gregg, Wilmington, DE 19810 (US)
(74) Representative: Jones, Alan John
(86) International application number: US9805093
(87) International publication number: WO9841593

(56) References cited:
- WO-A-96/20879
- US-A- 5 306 542

## Description

### Technical Field

This invention relates to a closure for a container having a sealing liner. More particularly, this invention relates to a composition for a sealing liner for a closure having improved removal torque and carbonation retention properties.

### Background of the Invention

Many liquid products are packaged in containers which have openings that must be sealed with some type of closure. For example, a bottle that contains a carbonated beverage typically has a removable closure that must provide the necessary sealing of the pressurized contents of the bottle. While metal closures are well known in the art, molded plastic closures have met with widespread commercial success in the marketplace.

In many closures, it is desirable to include a sealing liner in an outer closure cup or shell of the closure. Sealing liners for closures are known to those skilled in the art, and are typically formed of materials which are less rigid (i.e., more compliant) than the material from which the outer cup is made. The sealing liner forms a seal between the container and the outer closure cup. Preferably, the seal that is formed by the closure prevents the contents of the container, including pressurized gas, from spilling or being released from the container. Furthermore, the closure prevents contamination of the contents of the container (see for example WO 96/20879).

A satisfactory sealing liner must provide for an acceptable removal torque of the closure for ease of removal by consumers and satisfactory performance when the sealed container is subjected to various environmental stresses such as temperature, pressure and humidity changes. The sealed container must also be able to withstand mechanical shock.

### Summary of the Invention

The present invention provides a sealing liner for a closure that comprises an ethylene and vinyl acetate (EVA) copolymer, an ionomer, and a lubricant package. A colorant can additionally be incorporated into the liner composition. The proper combination of EVA properties, the stiffness of the ionomer resin, and the presence of a multi-component lubricant additive provide a cap liner resin having superior low removal torque and carbonation retention properties.

The blend comprises 85 to 95 weight percent (wt.%) EVA, and 5 to 15 wt.% ionomer, weight percentages based on total weight of EVA and ionomer in blend. The lubricant package comprising two fatty acid components, particularly erucamide and N,N'-ethylene-bis-oleamide (EBO) in a 50:50 blend by weight, is present in 0.3 to 2 parts per hundred parts by weight of total EVA and ionomer blend.

The EVA has a net VA content of from 15 to 22 wt.%, net VA content being the % VA in the EVA times the weight percent of the EVA resin in the blend. The EVA may have a melt index (MI), as measured in accord with ASTM D-1238, condition E, of 0.7 to 500 dg./min., but most preferably 20 to 40 dg./min.

The ionomer is a stiff, partially neutralized ethylene α,β ethylenically unsaturated carboxylic acid copolymer, that is one having a flexural modulus, as measured in accord with ASTM D-790, of 2.8 x 10⁸ Pascals (40,000 psi.) or greater, preferably 3.8 x 10⁸ Pascals (55,000 psi.) or greater.

### Detailed Description of the Invention

The present invention provides a sealing liner for closures which has excellent low removal torque and excellent carbonation retention. The liners comprise an ethylene and vinyl acetate copolymer, an ionomer and a lubricant package.

The closure of the present invention may be any closure that is known in the art in which the use of a liner is desirable, including plastic or metal closures and crowns. Preferably, however, the closure is a plastic closure. The container for which the closure is designed to seal can also be selected from containers known to those skilled in the art, such as glass or plastic containers.

In accordance with the present invention, the closure includes an outer plastic cup or shell which contains a sealing liner which may be compression molded *in situ* on the interior of the shell, or the liner may be introduced into the shell by other means known to those skilled in the art. For a representative plastic closure with a compression molded sealing liner, see U.S. Patent Nos. 4,984,703 and 4,497,765.

Typical liners for closures are round disks and can have various diameters. In general, liners have a diameter in the range of 25 mm to 50 mm, with 28, 38 and 43 mm being preferred.

In addition, the thickness of a liner may vary. A liner may have a uniform thickness or a liner may have different thicknesses at different portions of the liner. For example, some liners are thicker at the edge portion than at the central portion of the liner. A preferred thickness at the central portion of the liner is 0.28 mm (.011 in.).

The liners of the present invention comprise a blend of an ethylene and vinyl acetate (EVA) copolymer, an ionomer and a lubricant package. As used herein the term "copolymer" shall include block, random alternating and graft copolymers.

The blend preferably comprises 85 to 95 (more preferably 87 to 93, or 90) weight percent (wt.%) EVA, and 5 to 15 (more preferably 7 to 13, or 10) wt.% ionomer, weight percentages based on total weight of EVA and ionomer in blend. The lubricant package preferably is a two-component lubricant package present in 0.3 to 2 parts (preferably 1 part) per hundred parts by weight of total EVA and ionomer blend. Preferably the two components of the lubricant package are present in a 50:50 blend by weight, but may be present in a 10:90 to 90:10 ratio.

### EVA

The EVA has a net VA content of from 15 to 22 (preferably 16 to 18) wt.% net VA content, net VA content being the % VA in the EVA times the weight percent of the EVA resin in the blend. The EVA may have a melt index (MI), as measured in accord with ASTM D-1238, condition E, of 0.7 to 500 dg/min. Preferably, the MI of the EVA copolymer is in the range of 2.0 to 150, and more preferably, in the range of 20 to 40. A mixture of two or more EVA copolymers may be used in a liner composition. For example, the copolymers can have different molecular weights and/or contain different amounts of vinyl acetate.

Additionally, the EVA copolymer may contain antioxidants which can function to improve thermal stability of the copolymer.

### IONOMER

The ionomers in the present invention are ionically crosslinked thermoplastic resins generally prepared by neutralizing a copolymer containing pendant acid groups, e.g., carboxylic acid groups, sulfonic acid groups and/or phosphonic acid groups, with an ionizable metal compound, e.g., a compound of the monovalent, divalent and/or trivalent metals of Group I, II, III, IV-A and VIII of the periodic-table of the elements.

A preferred group of ionomer resins is derived from a copolymer of at least one alpha-olefin and at least one ethylenically unsaturated carboxylic acid and/or anhydride. Suitable alpha-olefins include ethylene, propylene, 1-butene, 1-pentene, 1-hexene, 1-heptene, 3-methylbutene. Suitable carboxylic acids and anhydrides include acrylic acid, methacrylic acid, ethacrylic acid, maleic acid, fumaric acid, maleic anhydride. The foregoing copolymers advantageously contain from 0.2 to 25 mole percent, and preferably from 0.5 to 15 mole percent, carboxylic acid groups.

Particular examples of such copolymers include ethylene-acrylic acid copolymers, ethylene-methacrylic acid copolymers, ethylene-itaconic acid copolymers, ethylene-methyl hydrogen maleate copolymers, ethylene-maleic acid copolymers, ethylene-acrylic acid copolymers, ethylene-methacrylate copolymers, ethylene-methacrylic acid-ethacrylate copolymers, ethylene-itaconic acid-methacrylate copolymers, ethylene-itaconic acid-methacrylate copolymers, ethylenemethyl hydrogen maleate-ethyl acrylate copolymers, ethylenemethacrylic acid-vinyl acetate copolymers, ethylene-acrylic acid copolymers, ethylene-acrylic acid-vinyl alcohol copolymers, ethyleneacrylic acid-carbon monoxide copolymers, ethylene-propylene-acrylic acid copolymers, ethylene-methacrylic acid-acrylonitrile copolymers, ethylene-fumaric acid vinyl methyl ether copolymers, ethylene-vinyl chloride-acrylic acid copolymers, ethylene-vinylidene chloride-acrylic acid copolymers, ethylene-vinylidene chloride-acrylic acid copolymer ethylene-vinyl fluoride-methacrylic acid copolymers and ethylenechlorotrifluoroethylene-methacrylic acid copolymers.

The copolymers may also, after polymerization but prior to ionic crosslinking, be further modified by various reactions to result in polymer modifications that do not interfere with their subsequent ionic crosslinking. Halogenation of an olefin acid copolymer is an example of such polymer modification.

The preferred ionomers are obtained by reacting the foregoing copolymers with a sufficient amount of metal ions as to neutralize at least 5, preferably from 20 to 80, wt.% of the acid groups present. Suitable monovalent metal ions include Na⁺, K⁺, Li⁺, Cs⁺, Rb⁺, Hg⁺ and Cu⁺. Suitable divalent ions include Be⁺², Mg⁺², Ca⁺², Sr⁺², Ba⁺², Cu⁺², Cd⁺², Hg⁺², Sn⁺², Pb⁺², Fe⁺², Co⁺², Ni⁺² and Zn⁺². Suitable trivalerit metal ions include Al⁺³ and Y⁺³. The preferred metals suitable for neutralizing the copolymers used herein are the alkali metals, particularly, cations such as sodium, lithium and potassium and alkaline earth metals, in particular, cations such as calcium, magnesium and zinc. Also, it is contemplated that one or more ionomers may be used in the present invention. Preferred ionomers include those alpha olefin, particularly ethylene, α,β ethylenically unsaturated carboxylic acid, particularly acrylic and methacrylic acid, copolymers containing 9 to 20 % acid groups prior to neutralization wherein 5 to 80 wt.% of the acid groups are neutralized with an alkali metal or an alkaline earth metal cation. Preferred cations are zinc and sodium. Particularly preferred are the partially neutralized sodium salts of an 15% acid, ethylene methacrylic acid copolymer.

The ionomer is preferably a stiff ionomer, that is one having a flexural modulus, as measured in accord with ASTM D-790, of 2.8 x 10⁸ Pascals (40,000 psi.) or greater, more preferably 3.8 x 10⁸ Pascals (55,000 psi.) or greater.

### Lubricant Package

The lubricant package of the present invention contains a blend of fatty acid amides, one or more being selected from the group consisting of primary fatty acid amides together with one or more being selected from the group consisting of bis-fatty acid amides. U.S. Patent No. 5,306,542, teaches various such blends. The preferred blend comprises erucamide and N,N'-ethylene-bis-oleamide (EBO). The total amount of this blend added to the polymer blend is 0.3-2 parts (preferably 1%) per hundred parts of the EVA/ionomer blend.

The ratio of these two fatty acid amides is preferably 50:50 by weight, but may range 10:90 to 90:10.

### Other Components

The sealing liner composition of the present invention may also include various other components that are known to those skilled in the art. Colorants are examples of other materials which may be included in the liner composition. Examples of suitable colorants include, but are not limited to, phthalocyanine blue and gray colorants provided by blends of TiO₂ and carbon black.

### General Protocol for Blend Preparation and Liner Formation

Liner compositions are prepared by mixing the pellets of the various resins together with the additives in a container then tumble mixing so as to ensure uniform distribution of the pellets within the mixture as well as uniform distribution of the powder additives over the entire pellet matrix. This dry blend of pellets and additives is then fed into the feed hopper of a twin-screw extruder having a 30 millimeter (mm) diameter screw. By means of this extruder, the pellet and additive mixture is melted and thoroughly melt blended into a uniform mixture typically at temperatures of 149°C to 177°C (300 to 350°F). The resin melt is then extruded out through the strand die, cooled in a water bath, passed through a strand dewatering and drying process, and then chipped into pellets. Pellets blended as described are compression molded into liners inside of plastic polypropylene shells on equipment such as HC-17 equipment manufactured by Alcoa Closure Systems International, Inc., which was used in the Examples.

### General Protocol For Determining Removal Torque and Carbonation Retention of Lined Plastic Caps

### A. Description of Removal Torque Test for Beverage Caps

The purpose of this test is to give an accurate measure of the ease or difficulty of removal of a plastic cap from a carbonated beverage bottle. Exact details of this test may be found in the bulletin "Application Technical Bulletin" employed by the Alcoa Closure Systems International Co. Typical test equipment includes a Secure Pak Torque Meter, Alcoa 201 single head caper, Alcoa Magnetic capping head, and an Alcoa capping chuck.

Test caps and control caps are tested at the same time by this test. Both types of these caps are molded and lined on the same machines. The control closures are run immediately before the test run. Typically, 8 test closures and 8 control closures are used for each test period.

These prepared and lined closures are applied to the glass or PET container containing water or other beverage which has been pressurized at 4.0 +/-0.1 volumes of carbon dioxide (CO₂) gas. Closures are to be applied at a specified torque level, typically 14 kg-cm (12 inch-pound (in.-lb.)) static torque, 0.71 kg (50 pound) topload and 340 revolutions per minute (rpm) spindle speed using an Alcoa 201 capping machine.

The capped test containers are conditioned at 38°C (100°F) and cooled to ambient conditions prior to taking removal torque measurements. Aging periods at 100°F may vary with time periods up to 7 days being typical. Containers may also be aged at cold 5°C (40°F) temperature for time periods up to 72 hours. These containers are tested at 5°C (40°F) and the results reported as Cold Removal Torque values.

During the testing of the removal torques, the containers are evaluated in groups of 8. Each bottle is positioned on the removal torque meter and the bottle tightened to the test fixture in order to prevent bottle slippage during testing. The torque meter indicator needles are placed at the "0" position, the closure is gripped securely, and using a slow continuous motion, the operator turns the closure counter-clockwise causing the liner to slip from the bottle finish. The torque at which the liner breaks loose from the bottle finish is recorded on the test form. After all containers have been tested, the operator calculates the average, standard deviation, and the range of the values collected. The statistical "T" test may be used to determine if there is a difference between two variables. An "Analysis of Variants" test may be used to determine if there is a difference among 3 or more closures.

### B. Description of Carbonation Retention Test.

The purpose of this test is to determine the ability of a plastic closure to retain carbonation when the package is exposed to elevated temperatures. The testing apparatus includes a thermostatically controlled environmental chamber capable of maintaining 42°C (108°F) and 50°C (122°F), a Zahm & Nagel Carbonation Tester, and a carbonation chart relating head space pressure to volume of CO₂.

The aging period of this test may vary depending upon the expected climatic conditions of the geographic region where the beverage container is to be stored. For regions where the temperatures are moderate, the test involves aging 12 randomly selected carbonated beverage containers for 16 hours in a 42°C (108°F) environmental chamber. The aged containers are then removed from the chamber and allowed to return to ambient room temperature conditions over a 24 hour time period. The carbonation retention is then determined by measuring the head space pressure after shaking the container to assure better equilibrium of the CO₂ in the headspace above the beverage. The exact details of this part of the test are included in the analytic procedure designated PP-L-024 by Alcoa Closure Systems International Co of Crawfordsville, IN. For regions where the temperatures are very hot and warehousing and transport of carbonated beverages is done at hot temperatures, the test is slightly different. In this version of the test, 72 samples are tested if the container is PET or 48 samples tested if the container is glass. The PET containers are aged at 42°C (108°F) in the environmental chamber for 14 days. If the containers are glass, they are aged at 50°C (122°F) for 7 days. The PET containers are tested at the intervals of 0, 1, 3, 7, 10, and 14 days. The glass containers are tested at the intervals of 0, 1, 3, and 7 days. For each interval, the temperature, pressure, and resultant carbonation data are recorded.

### EXAMPLES

The following examples are intended to illustrate specific embodiments of the invention and are not intended to limit the scope of the specification, including the claims, in any manner.

### Comparative Example 1

A liner composition according to the present invention was made by mixing about 90 wt.% of the entire liner composition of EVA copolymer with about 10 wt.% ionomer, which is a 37% neutralized sodium salt of an ethylene and 11 wt.% methacrylic acid copolymer and having an MI of about 10 dg./min. The EVA copolymer had a melt index of about 25 dg/min. and contained about 28% by weight vinyl acetate. In addition, about 40 ppm (based on weight of the EVA/ionomer liner composition) of a colorant (phthalocyanine blue) was added, and about one part per hundred (based on weight of the EVA/ionomer liner composition) of a lubricant (erucamide) was added to the composition. These ingredients were well mixed by melt blending in a twin-screw extruder and pelletized as described above.

The above-described composition was found to compression mold well with excellent pellet stability into sealing liners for closures at a low temperature of about 177°C (350°F) by means of the process described above. The liners were then tested for cold removal torque in accordance with the protocol described above. The value determined for this control liner sample was 23 7 kg-cm (20.6 in.-lb.) of removal torque. The desired level of removal torque is less than 19.6 kg-cm (17 in.-lb.)

### Comparative Example 2

The liner composition of comparative Example 1 was employed, except that the composition contained 1 pph of an alternative lubricant (ethylene-bis-oleamide) (EBO) in place of the erucamide lubricant. Lined caps containing this liner material were prepared and tested for cold removal torque and found to have an average value of 30.3 kg-cm (26.3 in.-lb.), much higher than the goal value of about 19.6 kg-cm (17 in.-lb.)

### Comparative Example 3

The liner composition of comparative Example 1 was employed except that the final blend contained the mixed lubricant composed of 50% erucamide and 50% ethylene-bis-oleamide at a total concentration of 1 pph. Lined caps containing this liner material were prepared and tested for cold removal torque and found to have an average value of 20.6 kg-cm (17.9 in.-lb). Thus, resin blends containing the combination of these two lubricants proved to be a better lubricating additive for reducing cold removal torque values than either component by itself.

### Example 4

This example teaches that a blend composed of an EVA resin having a high hardness value and a relatively high melt flow value in combination with a SURLYN® ionomer resin having high stiffness value and in combination with the improved slip additive package described above in comparative Example 3, gave superior properties of low cold removal torque and very good high temperature carbonation retention, see Table 1.

A liner composition according to the present invention was made by mixing about 90 wt.% EVA copolymer with about 10 wt.% ionomer, which is a 59 % neutralized sodium salt of an ethylene and 15% methacrylic acid copolymer and having a MI of about 0.9 dg./min. This ionomeric resin had a very high stiffness value of 4.14 x 10⁸ 4.83 x 10⁸ Pascals (60-70 kpsi) as measured by Secant modulus test. The EVA copolymer had a relatively high melt index of about 30 dg./min. and contained about 18 wt.% vinyl acetate. This copolymer also had a high Shore A hardness value of 88. In addition, this blend contained 1 pph of the mixed lubricant composed of 50% by weight erucamide and 50% by weight EBO, as described above in Example 3. Additionally, this blend contained about 40 ppm of the blue colorant, phthalocyanine blue as described above in Example 1. These ingredients were well mixed by melt blending in a twin-screw extruder and pelletized as described above.

This composition was found to compression mold well with excellent pellet stability into sealing liners for closures at low temperature of about 177°C (350°F) by means of the process described above. The liners were then tested for cold removal torque in accordance with the protocol described above and found to have excellent low values averaging about 14.34 kg-cm (12.45 in.-lb.) much lower than the maximum goal value of 17 in.-lb. In addition, these liners were tested for their ability to retain carbonation at high temperature aging (42°C) for 7 days, and were found to average 3.86 volumes of CO₂, versus the goal value of 4.0 volumes of CO₂. See Table 1 for data.

### Example 5

This example teaches that the blend combination of a harder EVA resin having a lower melt flow value such as 8 dg./min. in combination with a rubbery material such as a cross-linked EVA resin plus the improved slip additive described in Example 3 did not have the best cold removal torque and carbonation retention properties. This blend did not contain a stiff ionomer component and a hard EVA resin with a high melt flow value as described in Example 4.

A liner composition was made by mixing about 90 wt.% an EVA copolymer containing about 12% vinyl acetate and having a melt flow value of 8 dg./min. The Shore-A hardness value for this resin was 93. A rubbery cross-linked EVA resin was added at about 10 wt.% to the blend. This rubbery EVA contained about 40% vinyl acetate and had a melt flow value of 3 dg./min. In addition, this blend contained about 1 pph of the improved slip additive described in comparative Example 3 as well as about 40 ppm of the blue colorant. These ingredients were well mixed by melt blending in a twin-screw extruder and pelletized as described above. This blend compression molded well into sealing liners. Cold removal torque values averaged about 16.1 kg-cm (14.0 in.-lb.) for this blend, and carbonation retention values averaged 4.17 volumes. Because of the higher cold removal torque values, this blend was not as desirable as the blend described in Example 4.

### Example 6

This example teaches that a harder blend composed of an EVA resin of high hardness but relatively low melt flow, and an EVA resin of high hardness and high melt flow, and a rubbery cross-linked EVA resin in addition to the improved slip additive package did not give the best improvement in cold removal torque and carbonation retention values. This blend did contain the improved slip additive described above in comparative Example 3. This blend lacked the presence of an ionomer component having a high modulus.

A liner composition was made by melt blending together about 80 wt.% EVA copolymer containing about 9% VA and having a melt flow value of 8 dg/min. The Shore-A hardness value for this EVA resin was about 95. The blend also contained about 10 wt.% of a second EVA containing about 18% VA and having a high melt flow value of 30 dg/min. and about 10 wt.% of a cross-linked, rubbery EVA containing about 40 wt.% VA and having a melt flow value of 3 dg./min. This blend also contained about 1 pph of the improved slip additive described above in Example 3 as well as about 40 ppm of the blue colorant. These ingredients were well mixed by melt blending in a twin-screw extruder and pelletized as describe above. This blend had a Shore-A hardness value of about 93 and compression molded well into sealing liners. Cold removal torque values averaged about 16.42 kg-cm (14.25 in.-lb.) for this blend and carbonation retention values averaged 3.32 volumes. Because of the higher removal torque values and lower carbonation retention values, this blend was not as desirable as the blend described in Example 4.

### Example 7

This example teaches that a softer blend composed of a soft EVA having a high melt flow value with a hard EVA having a low melt flow value and in combination with an ionomer resin having a high modulus and with the new improved slip additive package did not have the best removal torque and carbonation retention properties. This blend did not contain a hard EVA having a high melt flow value.

A liner composition was melt blended by mixing together about 80 wt.% EVA copolymer containing about 28% by weight VA and having a melt flow value of about 25 dg./min. with about 10 wt.% of another EVA resin containing about 9% by weight VA and having a melt flow value of about 7 dg./min. and with about 10 wt.% of the ionomer resin used in Example 4 and with about 1 pph of the improved slip additive described above in comparative Example 3. This blend also contained about 40 ppm of the blue colorant. The Shore-A hardness value for this blend was 84. These ingredients were well mixed by melt blending in a twin-screw extruder and pelletized as described above. The blend compression molded well into sealing liners. Cold removal torque values average 16.88 kg-cm (14.65 in.-lb.) for this blend and carbonation retention averaged 3.74 volumes. Because of the higher cold removal torque values and low carbonation retention values, this blend was not as desirable as the blend described in Example 4.

**TABLE 1**

| Example No. | Cold Removal Torque (in.-lb.) | 7-Day Carbonation Retention (Vol.) | Blend Hardness (Shore A) |
|---|---|---|---|
| 1* | 20.6 | -- | -- |
| 2* | 26.3 | -- | -- |
| 3* | 17.9 | -- | -- |
| 4 | 12.45 | 3.86 | 92 |
| 5 | 14.0 | 4.17 | 92 |
| 6 | 14.25 | 3.32 | 93 |
| 7 | 14.65 | 3.74 | 84 |

| | | | |
|---|---|---|---|
| * Example 1-3 are comparative Examples | | | |

## Claims

1. A sealing liner for a closure, the liner comprising 85 to 95 weight percent ethylene and vinyl acetate copolymer and 5 to 15 weight percent of an ionomer having a secant flexural modulus of at least 2.8 x 10⁸ Pascals (40,000 psi.) said weight percentages based on the total of ethylene and vinyl acetate copolymer and ionomer and 0.3 to 2 parts by weight of a lubricant package comprising a blend of one of more fatty acid amides selected from the group consisting of primary fatty acid amides together with one or more fatty acid amides selected from the group consisting of bis-fatty acid amides in a ratio of primary fatty acid amides to bis-fatty acid amides of 10:90 to 90:10 per hundred parts by weight of the total of ethylene and vinyl acetate copolymer and ionomer, the net vinyl acetate content is 15 to 22 %, net content being equal to the weight percent ethylene and vinyl acetate copolymer in the ethylene and vinyl acetate copolymer/ionomer blend times the percent vinyl acetate in the ethylene and vinyl acetate copolymer.

2. The sealing liner of Claim 1 wherein the ethylene and vinyl acetate copolymer is 87 to 93 weight percent and the ionomer is 7 to 13 weight percent of the total of ethylene and vinyl acetate copolymer and ionomer.

3. The sealing liner of Claim 2 wherein the ethylene and vinyl acetate copolymer is 90 weight percent and the ionomer is 10 weight percent of the total of ethylene and vinyl acetate copolymer and ionomer.

4. The sealing liner of Claim 1, 2, or 3 wherein the net vinyl acetate content is 16 to 18 %.

5. The sealing liner of Claim 4 wherein the ionomer having a secant flexural modulus of at least 3.8 x 10⁸ Pascals (55,000 psi.).

6. The sealing liner of Claim 1, 2, or 3 wherein the ionomer comprises a copolymer of at least one alpha-olefin and at least one α,β ethylenically unsaturated carboxylic acid or acid anhydride, partially neutralized by a monovalent, divalent or trivalent metal cation.

7. The sealing liner of Claim 6 wherein the copolymer contains 9 to 20% acid groups 5 to 80 percent by weight neutralized with an alkali metal or alkaline earth metal cation.

8. The sealing liner of Claim 7 wherein the ionomer is an ethylene and methacrylic acid copolymer neutralized with zinc or sodium.

## Patentansprüche

1. Dichtungsauflage für einen Verschluß, wobei die Auflage 85 bis 95 Gew.-% Ethylen-Vinylacetat-Copolymer und 5 bis 15 Gew.-% eines Ionomers, das ein Sekans-Biegemodul von wenigstens 2,8 x 10⁸ Pa (40000 psi) hat, wobei die Gewichtsprozentsätze auf der Gesamtmenge an Ethylen-Vinylacetat-Copolymer und lonomer basieren, und 0,3 bis 2 Gewichtsteile eines Schmiermittelpaketes umfaßt, das einen Verschnitt aus einem oder mehreren Fettsäureamiden, die aus der aus primären Fettsäureamiden bestehenden Gruppe ausgewählt werden, mit einem oder mehreren Fettsäureamiden, die aus der aus bis-Fettsäureamiden bestehenden Gruppe ausgewählt werden, in einem Verhältnis von primären Fettsäureamiden zu bis-Fettsäureamiden von 10:90 bis zu 90:10 je Hundert Gewichtsteile der Gesamtmenge an Ethylen-Vinylacetat-Copolymer und Ionomer umfaßt, wobei der Vinylacetat-Nettogehalt 15 bis 22% beträgt, wobei der Nettogehalt gleich dem Gewichtsprozentsatz an Ehtylen-Vinylacetat-Copolymer in der Mischung aus Ethylen-Vinylacetat-Copolymer und Ionomer, multipliziert mit dem Prozentsatz des Vinylacetats im Ethylen-Vinylacetat-Copolymer, ist.

2. Dichtungsauflage nach Anspruch 1, bei der das Ethylen-Vinylacetat-Copolymer 87 bis 93 Gew.-% ausmacht und das Ionomer 7 bis 13 Gew.-% der Gesamtmenge an Ethylen-Vinylacetat-Copolymer und lonomer ausmacht.

3. Dichtungsauflage nach Anspruch 2, bei der das Ethylen-Vinylacetat-Copolymer 90 Gew.-% ausmacht und das Ionomer 10 Gew.-% der Gesamtmenge an Ethylen-Vinylacetat-Copolymer und Ionomer ausmacht.

4. Dichtungsauflage nach Anspruch 1, 2 oder 3, bei welcher der Vinylacetat-Nettogehalt 16 bis 18% beträgt.

5. Dichtungsauflage nach Anspruch 4, bei der das Ionomer ein Sekans-Biegemodul von wenigstens 3,8 x 10⁸ Pa (55000 psi) hat.

6. Dichtungsauflage nach Anspruch 1, 2 oder 3, bei der das Ionomer ein Copolymer aus wenigstens einem Alpha-Olefin und wenigstens einer α,β-ethylen-ungesättigten Carbonsäure oder einem -Carbonsäureanhydrid umfaßt, partiell neutralisiert durch ein einwertiges, zweiwertiges oder dreiwertiges Metallkation.

7. Dichtungsauflage nach Anspruch 6, bei der das Copolymer 9 bis 20% Säuregruppen enthält, 5 bis 80 Gew.-% neutralisiert mit einem Alkalimetall- oder Erdalkalimetallkation.

8. Dichtungsauflage nach Anspruch 7, bei der das Ionomer ein Ethylen-Methacrylsäure-Copolymer ist, neutralisiert mit Zink oder Natrium.

## Revendications

1. Joint d'étanchéité pour une fermeture, le joint comprenant 85 à 95% en poids d'un copolymère d'éthylène et d'acétate de vinyle et 5 à 15% en poids d'un ionomère ayant un module de flexion sécant d'au moins 2,8x10⁸ Pascals (40 000 psi), lesdits pourcentages en poids étant basés sur le total du copolymère d'éthylène et d'acétate de vinyle et de l'ionomère et 0,3 à 2 parties en poids d'un mélange lubrifiant comprenant un mélange de un ou plusieurs amides d'acides gras choisis parmi le groupe constitué d'amides d'acides gras primaires conjointement avec un ou plusieurs amides d'acides gras choisis parmi le groupe constitué d'amides de bis-acides gras dans un rapport des amides d'acides gras aux amides de bis-acides gras de 10:90 à 90:10 par 100 parties en poids du total du copolymère d'éthylène et d'acétate de vinyle et de l'ionomère, la teneur nette en acétate de vinyle est 15 à 22%, la teneur nette étant égale au pourcentage en poids du copolymère d'éthylène et d'acétate de vinyle dans le mélange copolymère d'éthylène et d'acétate de vinyle/ionomère multiplié par le pourcentage d'acétate de vinyle dans le copolymère d'éthylène et d'acétate de vinyle.

2. Joint d'étanchéité selon la revendication 1, dans lequel le copolymère d'éthylène et d'acétate de vinyle est 87 à 93% en poids et l'ionomère est 7 à 13% en poids du total du copolymère d'éthylène et d'acétate de vinyle et de l'ionomère.

3. Joint d'étanchéité selon la revendication 2, dans lequel le copolymère d'éthylène et d'acétate de vinyle est 90% en poids et l'ionomère est 10% en poids du total du copolymère d'éthylène et d'acétate de vinyle et de l'ionomère.

4. Joint d'étanchéité selon la revendication 1, 2 ou 3, dans lequel la teneur nette en acétate de vinyle est 16 à 18%.

5. Joint d'étanchéité selon la revendication 4, dans lequel l'ionomère a un module de flexion sécant d'au moins 3,8 x 10⁸ Pascals (55 000 psi).

6. Joint d'étanchéité selon la revendication 1, 2 ou 3, dans lequel l'ionomère comprend un copolymère d'au moins une alpha-oléfine et au moins un acide carboxylique ou un anhydride d'acide α,β éthyléniquement insaturé, partiellement neutralisé par un cation de métal monovalent, divalent ou trivalent.

7. Joint d'étanchéité selon la revendication 6, dans lequel le copolymère contient 9 à 20% de groupements acide 5 à 80% en poids neutralisés avec un cation de métal alcalin ou alcalino-terreux.

8. Joint d'étanchéité selon la revendication 7, dans lequel l'ionomère est un copolymère d'éthylène et d'acide méthacrylique neutralisé avec du zinc ou du sodium.
